# EUROPEAN PATENT APPLICATION

(11) **EP 4 760 948 A1**
(43) Date of publication of application: **17.06.2026**
(21) Application number: 25790512.5
(22) Date of filing: 15.01.2025
(51) Int. Cl.: H01M 50/383, H01M 50/342, H01M 50/262, H01M 50/289, H01M 50/271, H01M 50/249

(54) **BATTERY PACK**

(30) Priority: 16.04.2024 KR 20240050779; 13.01.2025 KR 20250004843
(71) Applicant: LG Energy Solution, Ltd., Seoul 07335 (KR)
(72) Inventor: HWANG, Tae-Won, Daejeon 34122 (KR); KANG, Jong-Mo, Daejeon 34122 (KR); KIM, Soo-Youl, Daejeon 34122 (KR); MUN, Jeong-O, Daejeon 34122 (KR); SEO, Sung-Won, Daejeon 34122 (KR); JUNG, Hye-Mi, Daejeon 34122 (KR)
(74) Representative: Plasseraud IP
(86) International application number: PCT/KR2025/000918
(87) International publication number: WO 2025/220851

(57) **Abstract**

A battery pack according to an embodiment of the present disclosure includes: a case providing an internal space and including a pack cover; a battery cell positioned within the case; a partition wall partitioning the internal space of the case; and a melting bolt fastening the pack cover and the partition wall. The melting bolt is configured to melt at a predetermined temperature.

## Description

### TECHNICAL FIELD

The present disclosure relates to a battery pack.

This application is based on and claims priority from Korean Patent Application No. 10-2024-0050779, filed on April 16, 2024, with the Korean Intellectual Property Office, and Korean Patent Application No. 10-2025-0004843, filed on January 13, 2025, with the Korean Intellectual Property Office, the disclosures of which are incorporated herein in their entirety by reference.

### BACKGROUND ART

Recently, rechargeable secondary batteries capable of charging and discharging repeatedly have been widely used not only in small portable electronic devices such as smartphones, tablet PCs, and smartwatches, but also in medium- and large-scale devices such as electric vehicles (EVs) and energy storage systems (ESSs) for driving and energy storage purposes. Researches in this field are being conducted actively.

Existing commercially available secondary batteries include, for example, nickel-cadmium batteries, nickel-hydrogen batteries, nickel-zinc batteries, and lithium secondary batteries. Among these, lithium secondary batteries, compared to nickel-based secondary batteries, are attracting attention due to their advantages, such as free charging and discharging due to little memory effect, very low self-discharge rate, and high energy density.

Such lithium secondary batteries mainly use lithium-based oxides and carbon materials as positive and negative active materials, respectively. The lithium secondary batteries include an electrode assembly in which positive and negative electrode plates are coated with the positive and negative active materials, respectively, and are disposed with a separator interposed therebetween, and an exterior material, i.e., a battery case, that seals and accommodates the electrode assembly together with an electrolyte.

In general, depending on the shape of the outer packaging material, lithium secondary batteries may be classified into can-type secondary batteries, in which an electrode assembly is built into a metal can, and pouch-type secondary batteries, in which an electrode assembly is built into a pouch of an aluminum laminate sheet.

Recently, secondary batteries have been widely used for driving and energy storage not only in small devices such as portable electronic devices but also in medium and large devices such as electric vehicles and energy storage systems (ESS). These secondary batteries may be housed together inside a module case, in the state of being electrically connected in large numbers, to form a single battery module. At this time, each secondary battery included in one battery module may be referred to as a battery cell. In addition, multiple battery modules may be connected to form a single battery pack.

As secondary batteries in the form of battery modules and battery packs with multiple battery cells connected are being use widely, incidents of fire and explosion have occurred, and battery safety has become increasingly important.

However, when multiple battery modules are included in a battery pack, and each battery module contains multiple battery cells, the battery pack may be vulnerable to thermal chain reactions between the battery modules or the battery cells. For example, when an event such as thermal runaway occurs within one of the battery modules, it is necessary to suppress the propagation of such thermal runaway to other battery modules or battery cells. When the propagation of thermal runaway between the battery modules or battery cells is not properly suppressed, an event occurring in a specific battery module or battery cell may trigger a chain thermal reaction in other battery modules or battery cells, which may cause an explosion or fire, or significantly increase the scale of the chain thermal reaction.

For example, when an event such as thermal runaway occurs in one of the battery modules, for example, gases or flames may be randomly emitted to the outside. When the discharge of gases or flames is not properly controlled, the gases or flames may be directed toward other battery modules, which may trigger thermal chain reactions in those modules. In particular, on the front side of the battery module, there may be a module terminal, and a configuration such as a module busbar for electrical connection with other battery modules or battery packs. Therefore, when flames are emitted from the front side of this battery module, the module terminals within the battery pack may be damaged, causing an electrical short. Furthermore, since there may be other battery modules on the front side of the battery module, flames emitted in this direction could reach adjacent battery modules, making it easier for fire to spread between modules.

When thermal propagation between battery modules or battery cells is not properly controlled, a rapid voltage drop in the battery modules or battery pack may occur. This may lead to the sudden shutdown of the device equipped with the battery modules or battery pack, causing unexpected damage. For example, when a sudden voltage drop occurs in the battery pack while an electric vehicle is in operation, there may not be enough time to move the vehicle to a safe location.

Furthermore, when a sudden fire or explosion occurs due to failure to properly control thermal propagation between battery modules or battery cells, there is a high possibility of causing injury or death to users. For example, when thermal runaway occurs in an electric vehicle, passengers may not be able to escape safely unless sufficient time is provided before the situation escalates into a full-scale fire.

### DISCLOSURE

### Technical Problem

The present disclosure provides, for example, a battery pack with an improved structure capable of appropriately controlling, for example, the release of flames generated inside a battery module, as well as vehicles including the battery pack.

In addition, the present disclosure provides a structure that facilitates the expansion of the internal space of a battery pack when a thermal event occurs inside a battery module.

In addition, the present disclosure provides a structure in which a pack cover is adapted to easily inflate when a thermal event occurs inside a battery module.

Moreover, the present disclosure provides a structure that maintains the sealing of a battery pack when a thermal event occurs inside a battery module.

However, the technical problems to be solved by the present disclosure are not limited to the above-mentioned problems, and other problems not mentioned above may be clearly understood by a person ordinarily skilled in the art from the description of the disclosure set forth below.

### Technical Solution

A battery pack according to an embodiment of the present disclosure includes: a case providing an internal space and including a pack cover; a battery cell positioned within the case; a partition wall partitioning the internal space of the case; and a melting bolt fastening the pack cover and the partition wall. The melting bolt is configured to melt at a predetermined temperature.

The melting bolt may be configured to melt when a thermal event occurs in the battery cell.

The melting bolt may include a plastic material.

The battery pack may further include a nut positioned between the pack cover and the partition wall, and the melting bolt may pass through the pack cover and the nut and may be at least partially inserted into the partition wall.

The nut may be coupled to an inner surface of the pack cover.

The melting bolt may include a first part passing through the pack cover and the nut, and a second part extending from the first part and inserted into the partition wall, and the first part may be longer than the second part.

The melting bolt may be configured such that the first part and the second part separate from each other when a thermal event occurs in the battery cell.

The partition wall may include an insertion hole into which the melting bolt is inserted, and the sum of the thickness of the pack cover and the thickness of the nut is greater than the depth of the insertion hole.

Multiple melting bolts may be provided, and the multiple melting bolts may be arranged along a longitudinal direction of the partition wall.

The battery pack may further include a module case installed within the case and configured to accommodate the battery cell, and the module case may include a venting hole facing the pack cover.

A vehicle according to an aspect of the present disclosure includes the battery pack of the present disclosure.

A battery pack case according to an embodiment of the present disclosure includes: a flat base plate; a side wall installed on a top surface of the base plate along a perimeter of the base plate; a flat pack cover coupled to an upper surface of the side wall and defining an internal space together with the base plate; a partition wall installed on the top surface of the base plate and partitioning the internal space; and a melting bolt fastening the pack cover and the partition wall. The melting bolt is configured to melt at a predetermined temperature.

The melting bolt is configured to melt when a thermal event occurs in the battery cell.

The melting bolt includes a plastic material.

The battery pack case includes a nut positioned between the pack cover and the partition wall, and the melting bolt passes through the pack cover and the nut and is at least partially inserted into the partition wall.

The melting bolt includes a first part passing through the pack cover and the nut, and a second part extending from the first part and inserted into the partition wall, and the first part is longer than the second part.

The melting bolt is configured such that the first part and the second part separate from each other when a thermal event occurs in the battery cell.

A battery pack according to an aspect of the present disclosure includes the battery pack case.

### Advantageous Effects

According to at least one embodiment of the present disclosure, the emission of gases or flames generated inside the battery module may be appropriately controlled.

According to at least one of the embodiments of the present disclosure, the electrical safety of the battery pack may be improved.

According to at least one of the embodiments of the present disclosure, even when a thermal event occurs inside the battery module, the sealing of the battery pack may be maintained.

According to at least one of the embodiments of the present disclosure, when a thermal event occurs inside the battery module, the internal space of the battery pack may be expanded, thereby preventing or suppressing an explosion of the battery pack.

### DESCRIPTION OF DRAWINGS

The following drawings attached hereto exemplify the embodiments of the present disclosure and serve to further understand the technical idea of the present disclosure together with the detailed description of the disclosure to be described later. Therefore, the present disclosure should not be construed as being limited to the matters illustrated in the drawings.
FIG. 1 is a view illustrating a battery pack according to an embodiment of the present disclosure.
FIG. 2 is a partially exploded view of the battery pack of FIG. 1.
FIG. 3 is a partially exploded view of the battery pack of FIG. 2.
FIG. 4 is a view illustrating the battery module of FIG. 3.
FIG. 5 is a partially exploded view of the battery module of FIG. 4.
FIG. 6 is a cross-sectional view taken along cutting line C-C' in FIG. 2.
FIG. 7 is a cross-sectional view taken along cutting line A-A' in FIG. 1.
FIG. 8 is a cross-sectional view taken along cutting line A-A' in FIG. 1 when a thermal event occurs.
FIG. 9 is a cross-sectional view taken along cutting line A-A' in FIG. 1 when a thermal event occurs.
FIG. 10 is a cross-sectional view taken along cutting line B-B' in FIG. 1 when a thermal event occurs.
FIG. 11 is a perspective view illustrating a vehicle including a battery pack according to an embodiment of the present disclosure.

In some of the accompanying drawings, corresponding components are given the same reference numerals. A person ordinarily skilled in the art will appreciate that the drawings illustrate elements simply and clearly and are not necessarily drawn to scale. For example, in order to aid understanding of various embodiments, the dimensions of some elements illustrated in the drawings may be exaggerated compared to other elements. In addition, elements that are useful or essential in commercially implementable embodiments but are known in the art may often not be described in order to avoid impeding the understanding of the spirit of various embodiments of the present disclosure.

### BEST MODE

Hereinafter, embodiments of the present disclosure will be described with reference to the attached drawings. Prior to this, the terms and words used in the specification and claims should not be construed as limited to their ordinary or dictionary meanings, but should be interpreted with meanings and concepts consistent with the technical idea of the present disclosure based on a principle that the inventor may appropriately define the concepts of terms in order to explain his or her invention in the best way.

Accordingly, since the embodiments described in this description and the configurations illustrated in the drawings are merely exemplary embodiments of the present disclosure, and do not represent all of the technical ideas of the present disclosure, it should be understood that there may be various equivalents and modifications that could serve as alternatives to the embodiments.

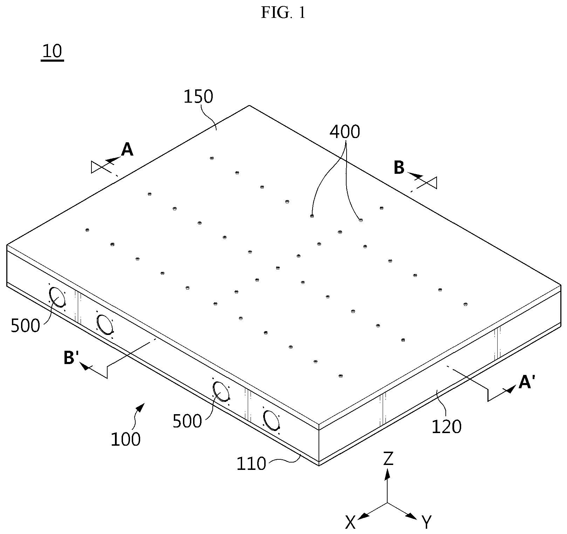

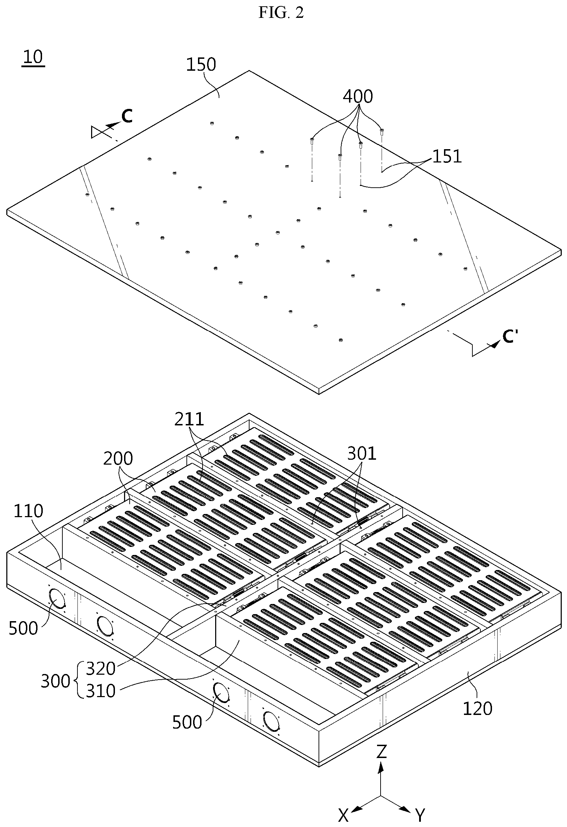

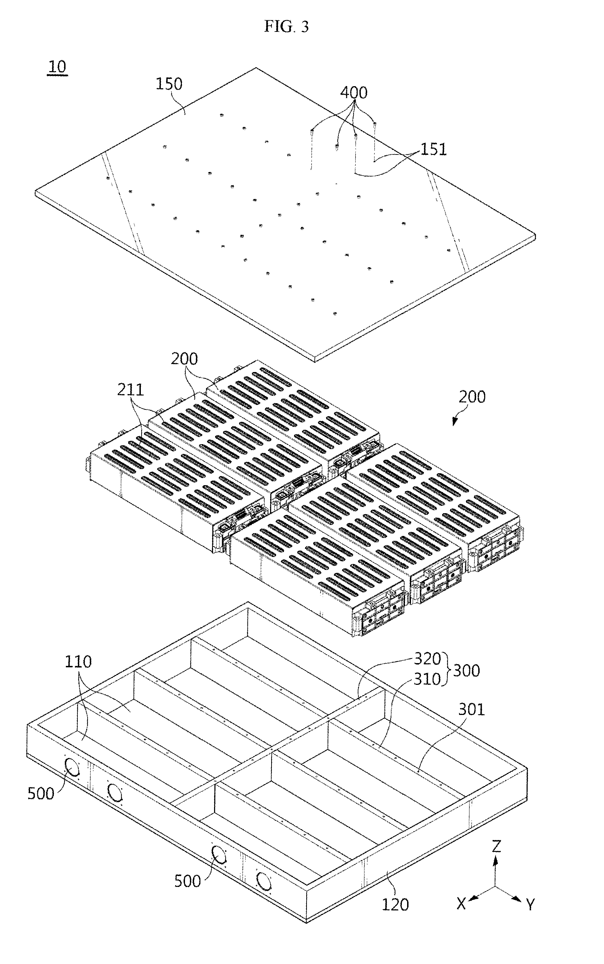

FIG. 1 is a view illustrating a battery pack 10 according to an embodiment of the present disclosure. FIG. 2 is a partially exploded view of the battery pack 10 of FIG. 1. FIG. 3 is a partially exploded view of the battery pack 10 of FIG. 2.

Referring to FIGS. 1 to 3, the battery pack 10 according to an embodiment of the present disclosure may include a pack case 100, a battery module 200, a partition wall 300, and a melting bolt 400.

The pack case 100 of the battery pack 10 may include a base plate 110, a side wall 120, and a pack cover 150. The base plate 110 may have a quadrilateral shape. The base plate 110 may have a flat plate shape. The base plate 110 may form the exterior of the battery pack 10. The base plate 110 may provide an internal space of the battery pack 10.

The side wall 120 may be installed, fastened, coupled, fixed, or attached to the top surface of the base plate 110. According to an embodiment, four side walls 120 may be provided. The side walls 120 may be arranged along the perimeter of the base plate 110. The side walls 120 may form the exterior of the battery pack 10. The side walls 120 may provide an internal space.

The pack cover 150 may have a quadrilateral plate shape. According to an embodiment, the pack cover 150 may have a flat plate shape. The pack cover 150 may form the exterior of the battery pack 10. The pack cover 150 may cover the internal space of the battery pack 10.

The battery module 200 may refer to a secondary battery module. For example, the battery module 200 may be a pouch-type secondary battery. However, the shape of the battery module 200 is not limited to a pouch shape and may take various shapes, such as a cylindrical shape or a rectangular parallelepiped shape. Multiple battery modules 200 may be provided.

The partition wall 300 may include a first partition wall 310 and a second partition wall 320. Multiple partition walls 300 may be provided. The partition walls 300 may be installed, fastened, fixed, coupled, or attached to the top surface of the base plate 110 of the pack case 100. The partition walls 300 may partition the internal space of the battery pack 10. The battery modules 200 may be located in the spaces partitioned by the partition walls 300. The partition walls 300 may be configured as a separate structure, or may be configured, for example, integrally with a portion of the pack case 100. According to an embodiment, the partition walls 300 may be configured integrally with the base plate 110 of the pack case 100.

The melting bolt 400 may fasten, couple, install, or fix the pack cover 150 to a partition wall 300 of the pack case 100. According to an embodiment, the melting bolt 400 can include a material that melts at a low temperature.

With this configuration of the present disclosure, the thermal safety of the battery pack 10 may be enhanced. When a thermal event occurs from a battery module 200, venting gas may be discharged. As a result, the pressure inside the battery pack 10 may rapidly increase. At this time, the melting bolt 400 may melt due to the temperature of the venting gas. As a result, the pack cover 150 and the partition wall 300 may be separated. As the pack cover 150 inflates outward, the space inside the battery pack 10 may be expanded. As a result, an explosion of the battery pack 10 may be prevented.

Referring to FIGS. 1 to 3, multiple melting bolts 400 may be provided in the battery pack 10 according to an embodiment of the present disclosure. The multiple melting bolts 400 may be arranged along the longitudinal direction of the partition walls 300. The first partition walls 310 of the partition walls 300 may extend along the left-right direction or the Y-axis direction. The second partition walls 320 of the partition walls 300 may extend along the front-rear direction or the X-axis direction. The multiple melting bolts 400 may be arranged along the longitudinal direction of the first partition walls 310 of the partition walls 300 or along the longitudinal direction of the second partition walls 320 of the partition walls 300.

With this configuration of the present disclosure, the thermal safety of the battery pack 10 may be enhanced. Since the multiple melting bolts 400 are coupled along the partition walls 300, the pack cover 150 may be stably coupled. In addition, when a thermal event occurs in the battery module 200, the pack cover 150 may be inflated in its entirety.

Referring to FIGS. 1 to 3, the battery pack 10 according to an embodiment of the present disclosure may include a venting device 500. According to an embodiment, the venting device 500 may be installed on a side wall 120 of the pack case 100. For example, the venting device 500 may be installed on a front side wall 120 of the pack case 100. For example, the venting device 500 may be a gas valve, and may be selectively switched between an open state and a closed state. The venting device 500 may be switched to an open state when the pressure inside the pack case 100 increases, thereby discharging gas. In addition, the venting device 500 may be switched to a closed state, thereby preventing external air from flowing into the pack case 100. Multiple venting devices 500 may be provided.

With this configuration of the present disclosure, the thermal safety of the battery pack 10 may be enhanced. When a thermal event occurs from a battery module 200, the pressure inside the battery pack 10 may rapidly increase. At this time, the venting devices 500 discharges the venting gas to the outside, and the pack cover 150 inflates outward, thereby preventing or suppressing the explosion of the battery pack 10.

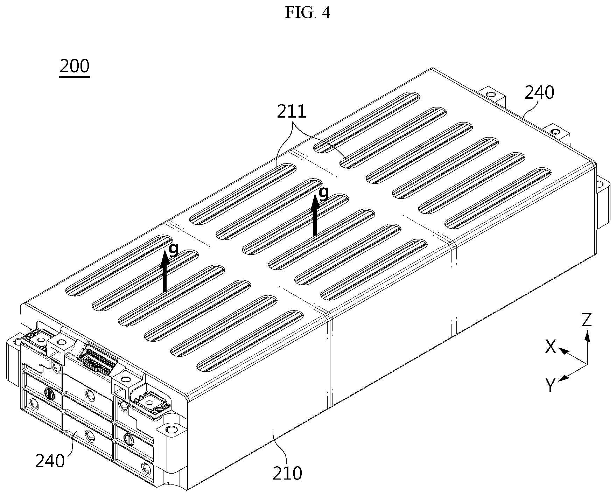

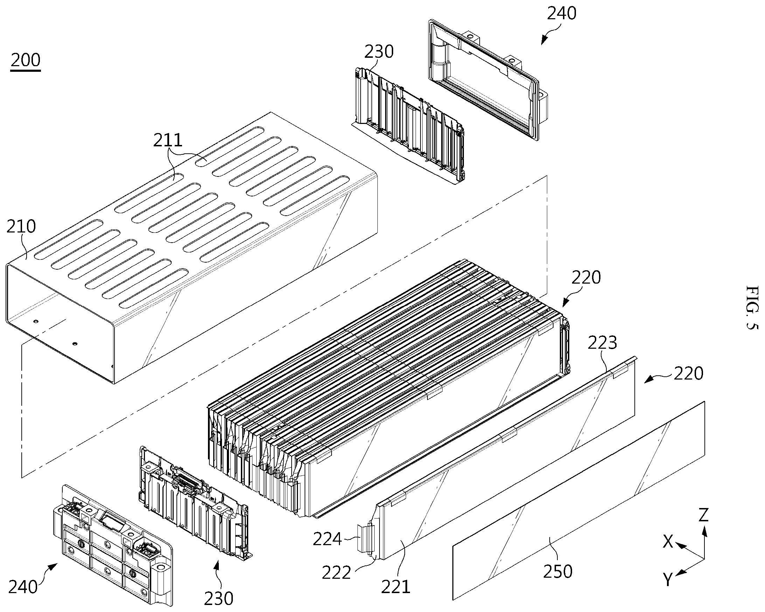

FIG. 4 is a view illustrating the battery module 200 of FIG. 3. FIG. 5 is a partially exploded view of the battery module 200 of FIG. 4.

Referring to FIGS. 1 to 5, the battery pack 10 according to an embodiment of the present disclosure may include multiple battery modules 200. The battery module 200 may include a module case 210, multiple battery cells 220, a module pad 250, a busbar frame assembly 230, and an end cover 240.

The module case 210 may have a rectangular parallelepiped shape. The module case 210 may also be referred to as a frame 210. The module case 210 may provide a space inside. The module case 210 may include a top plate, a bottom plate, and a pair of side plates. In addition, the module case 210 may have open front and rear sides. The module case 210 may have a venting hole 211 in the top plate. The venting hole 211 may connect the inside and the outside of the module case 210.

The battery cells 220 may be accommodated inside the module case 210. The multiple battery cells 220 may be stacked in the left-right direction or the Y-axis direction. The battery cells 220 may each include a housing 221 having an electrode assembly, first sealing portions 222 protruding forward and rearward from the housing 221, respectively, and a second sealing portion 223 protruding upward from the housing 221. In addition, the battery cells 220 may each include electrode leads 224 protruding forward and rearward from the first sealing portion 222, respectively. Each battery cell 220 may extend in the front-rear direction or the X-axis direction. The electrode leads 121 may protrude forward and rearward from each battery cell 220.

The module pad 250 may be placed between multiple battery cells 220. The module pad 250 may be placed between at least some of the battery cells 220 and/or on the outside of a stack. For example, the module pad 250 may be configured to be placed between adjacent battery cells 220 in four battery cells 220 stacked in the left and right directions.

The module pad 250 may be provided with an elastic material to enable swelling absorption of the battery cells 220. For example, the module pad 250 may be made of a foam material such as polyurethane. Alternatively, the module pad 250 may be provided with a material capable of blocking, for example, heat or flame. For example, the module pad 250 may be provided with an insulating or fireproof material such as silicone or mica.

Busbar frame assemblies 230 may be provided at the front and rear of the multiple battery cells 220, respectively. The busbar frame assemblies 230 may be electrically connected to the electrode leads 121 of the multiple battery cells 220.

A pair of end covers 240 may be coupled to the front and rear of the module case 210, respectively. The pair of end covers 240 may cover the front and rear surfaces of the module case 210, respectively. The end covers 240 may have a quadrilateral shape.

The battery module 200 may be installed, fastened, coupled, fixed, or attached to the top surface of the base plate 110 of the pack case 100. When a thermal event occurs from the battery module 200, the venting gas g may be discharged through the venting holes 211 formed in the top plate of the module case 210. The venting holes 211 may face the inner surface of the pack cover 150 of the pack case 100. The venting gas g discharged through the venting holes 211 of the module case 210 may push the pack cover 150 of the pack case 100 outward, upward or in the Z-axis direction.

The battery module 200 may be located in a space partitioned by the partition walls 300 installed inside the pack case 100. In addition, the partition walls 300 may face at least one surface of the battery module 200.

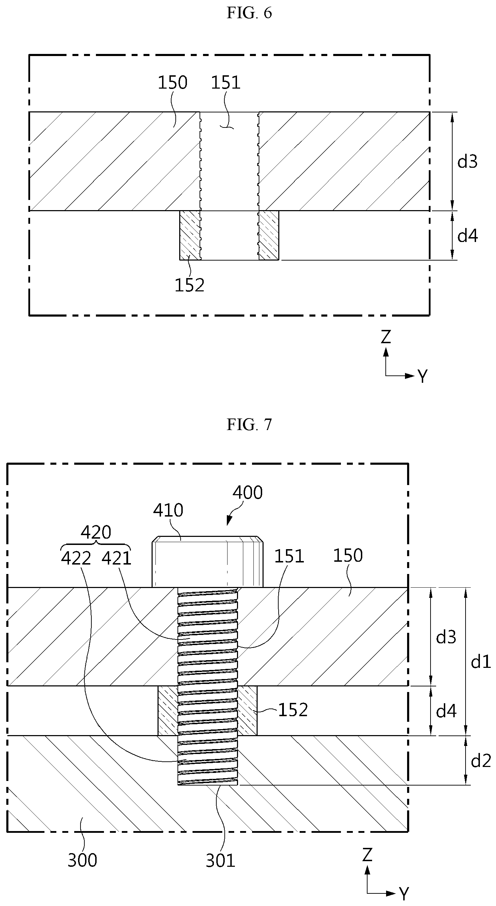

FIG. 6 is a cross-sectional view taken along cutting line C-C' in FIG. 2. FIG. 7 is a cross-sectional view taken along cutting line A-A' in FIG. 1.

Referring to FIGS. 6 and 7, the battery pack 10 according to an embodiment of the present disclosure may include a nut 152. The nut 152 may be located between the pack cover 150 and the partition wall 300. The melting bolt 400 may pass through the nut 152. In addition, the melting bolt 400 may pass through the pack cover 150. At least a portion of the melting bolt 400 may be inserted, fastened, coupled, or fixed to the partition wall 300.

The pack cover 150 may include a fastening hole 151. The partition wall 300 may include an insertion hole 301. The fastening hole 151 formed in the pack cover 150 and the insertion hole 301 formed in the partition wall 300 may each have a screw thread. The melting bolt 400 may be connected to the threads of the fastening hole 151, the nut 152 formed in the pack cover 150, and the insertion hole 301 formed in the partition wall 300.

According to the configuration of the present disclosure discussed above, the pack cover 150 and the partition wall 300 may be stably coupled, connected, or fixed. The nut 152 may increase the coupling strength between the pack cover 150 and the partition wall 300.

Referring to FIGS. 6 and 7, the nut 152 of the battery pack 10 according to an embodiment of the present disclosure may be coupled to the inner surface of the pack cover 150. For example, the nut 152 may be welded to the inner surface of the pack cover 150. In addition, the nut 152 and the pack cover 150 may be formed integrally. The nut 152 may be disposed to face the fastening hole 151 formed in the pack cover 150.

With this configuration of the present disclosure, the thermal safety of the battery pack 10 may be enhanced. Since the nut 152 is coupled to the inner surface of the pack cover 150, the coupling strength between the melting bolt 400 and the pack cover 150 may be higher than the coupling strength between the melting bolt 400 and the partition wall 300. Due to this, when a thermal event occurs in the battery module 200, the pack cover 150 and the partition wall 300 may be separated while the melting bolt 400 is connected to the pack cover 150. In addition, the pack cover 150 may be inflated while coupled to the melting bolt 400. Due to this, the fastening hole 151 may be maintained in a sealed state, and flames generated inside the battery pack 10 may be prevented from being exposed to the outside through the fastening hole 151. In addition, since the fastening hole 151 is sealed, external oxygen may be prevented from flowing into the inside of the battery pack 10.

Referring to FIGS. 6 and 7, the melting bolt 400 of the battery pack 10 according to an embodiment of the present disclosure may include a plastic material. Since the melting bolt 400 includes the plastic material, the coupling strength between the melting bolt 400 and the partition wall 300 may be reduced. In addition, since the melting bolt 400 includes the plastic material, it may easily melt.

With the configuration of the present disclosure discussed above, the thermal safety of the battery pack 10 may be enhanced. When a thermal event occurs in the battery module 200, the melting bolt 400 melts or the coupling between the melting bolt 400 and the partition wall 300 is released, allowing the pack cover 150 of the pack case 100 to easily inflate.

Referring to FIGS. 6 and 7, the melting bolt 400 of the battery pack 10 according to an embodiment of the present disclosure may include a melting bolt head 410 and a melting bolt body 420. The melting bolt body 420 may extend downward or along the -Z-axis direction from the melting bolt head 410. The melting bolt body 420 may have a screw thread. The melting bolt body 420 may include a first part 421 and a second part 422. The first part 421 of the melting bolt body 420 may be a portion passing through the pack cover 150 and the nut 152. The first part 421 of the melting bolt body 420 may extend from the melting bolt head 410. In addition, the second part 422 of the melting bolt body 420 may extend from the first part 421 downward or along the -Z-axis direction. The second part 422 of the melting bolt body 420 may be a portion inserted into the partition wall 300. In addition, the length d1 of the first part 421 of the melting bolt body 420 may be greater than the length d2 of the second part 422.

With the configuration of the present disclosure discussed above, the thermal safety of the battery pack 10 may be enhanced. Since the first part 421 of the melting bolt body 420 is longer than the second part 422, the coupling strength between the melting bolt 400 and the pack cover 150 may be higher than the coupling strength of the melting bolt 400 and the partition wall 300. Due to this, when a thermal event occurs in the battery module 200, the pack cover 150 and the partition wall 300 may be separated while the melting bolt 400 is connected to the pack cover 150. In addition, the pack cover 150 may be inflated while coupled to the melting bolt 400. Due to this, the sealing of the fastening hole 151 formed in the pack cover 150 may be maintained.

Referring to FIGS. 6 and 7, the sum of the thickness d3 of the pack cover 150 and the thickness d4 of the nut 152 of the battery pack 10 according to an embodiment of the present disclosure may be formed to be greater than the depth d2 of the insertion hole 301 formed in the partition wall 300. The sum of the thickness d3 of the pack cover 150 and the thickness d4 of the nut 152 may be configured to be substantially equal to the length d1 of the first part 421 of the melting bolt body 420. In addition, the depth d2 of the insertion hole 301 formed in the partition wall 300 may be configured to be substantially equal to the length d2 of the second part 422 of the melting bolt body 420.

With the configuration of the present disclosure discussed above, the thermal safety of the battery pack 10 may be enhanced. The coupling strength between the melting bolt 400 and the pack cover 150 may be higher than the coupling strength between the melting bolt 400 and the partition wall 300. Due to this, when a thermal event occurs in the battery module 200, the pack cover 150 and the partition wall 300 may be separated while the melting bolt 400 is connected to the pack cover 150. In addition, the pack cover 150 may be inflated while coupled to the melting bolt 400. Due to this, the sealing of the fastening hole 151 formed in the pack cover 150 may be maintained.

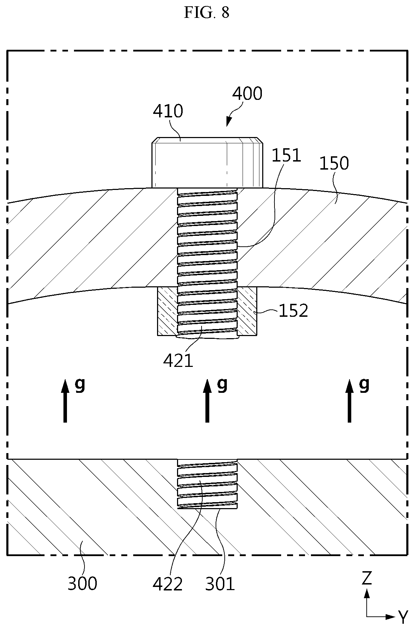

FIG. 8 is a cross-sectional view taken along cutting line A-A' in FIG. 1 when a thermal event occurs. Referring to FIGS. 6 to 8, the melting bolt 400 according to an embodiment of the present disclosure may be configured to melt when a thermal event occurs in a battery module 200. At this time, the melting bolt 400 may be configured such that the first part 421 and the second part 422 of the melting bolt body 420 are separated. The venting gas g may be introduced into the space between the nut 152 and the partition wall 300 to melt the melting bolt 400. As a result, the first part 421 and the second part 422 of the melting bolt body 420 may be separated. In addition, since the lower portion of the first part 421 of the melting bolt body 420 melts, the melting bolt 400 may seal the nut 152 more strongly. The second part 422 separated from the first part 421 of the melting bolt body 420 may be coupled to the insertion hole 301 formed in the partition wall 300.

With the configuration of the present disclosure discussed above, the thermal safety of the battery pack 10 may be enhanced. The sealing state of the fastening hole 151 formed in the pack cover 150 may be maintained by separating the first part 421 and the second part 422 of the melting bolt body 420.

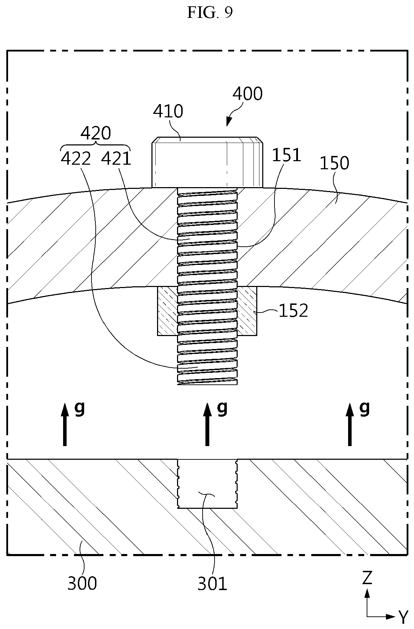

FIG. 9 is a view illustrating a cross-sectional view taken along cutting line A-A' of FIG. 1 when a thermal event occurs in the battery module 200. Referring to FIG. 9, the melting bolt 400 according to an embodiment of the present disclosure may be separated from the partition wall 300 when a thermal event occurs in the battery module 200. The pack cover 150 may be pressurized outward by the venting gas g. Due to this, the coupling between the second part 422 of the melting bolt body 420 and the insertion hole 301 formed in the partition wall 300 may be released, and the second part 422 of the melting bolt body 420 may be separated from the partition wall 300. The pack cover 150 may be inflated while maintaining the coupled state with the melting bolt 400. At this time, the melting bolt 400 may have a longer pitch than a normal bolt. Due to this, the melting bolt 400 may be easily separated from the partition wall 300 when a thermal event occurs in the battery module 200.

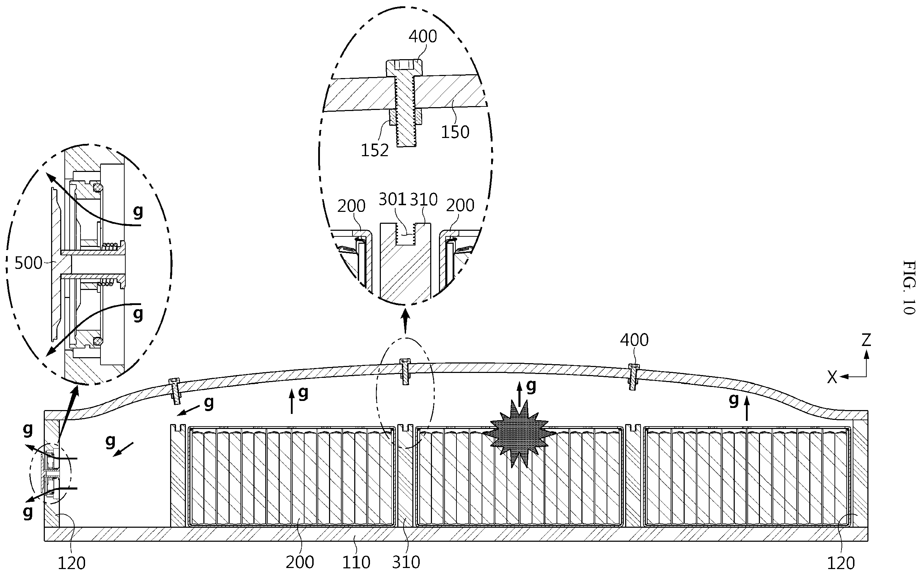

FIG. 10 is a cross-sectional view taken along cutting line B-B' of FIG. 1 when a thermal event occurs in the battery module 200. Referring to FIG. 10, when a thermal event occurs in the battery module 200, venting gas g may be discharged. The pressure due to the venting gas g may push the pack cover 150 outward. Due to this, the pack cover 150 may be separated from the first partition wall 310 of the partition wall 300 while maintaining the state of being coupled with the melting bolt 400. In addition, since the multiple melting bolts 400 and the first partition walls 310 of the partition walls (300) are separated, the pack cover 150 may be inflated as a whole. Due to this, the space inside the battery pack 10 may be expanded. In addition, the venting gas g may be discharged to the outside through the venting devices 500. As a result, an explosion of the battery pack 10 may be prevented.

The battery pack 10 according to the present disclosure may further include various components, such as components of various battery packs 10, such as a BMS, a busbar, a relay, and a current sensor, in addition to the battery modules 200.

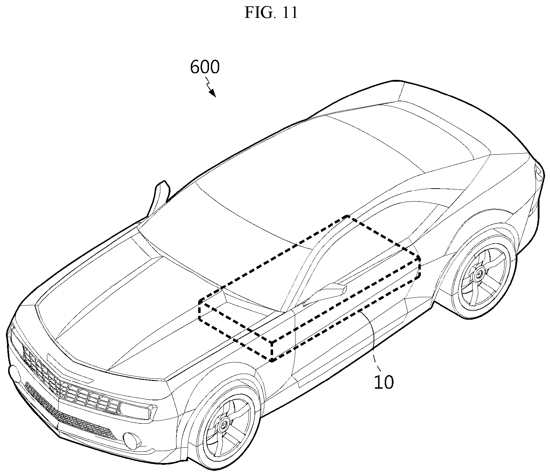

The battery pack 10 according to the present disclosure may be applied to a vehicle, such as an electric vehicle or a hybrid vehicle. Referring to FIG. 11, an electric vehicle 600 according to the present disclosure may include the battery pack 10 according to the present disclosure. In addition, the vehicle 600 according to the present disclosure may further include various components included in a vehicle, in addition to the battery pack 10. For example, the vehicle 600 according to the present disclosure may further include a vehicle body, a motor, or a controller such as an electronic control unit (ECU).

While the present disclosure has been described above with reference to several embodiments thereof, the present disclosure is not limited by the embodiments, and various changes and modifications can be made by a person ordinarily skilled in the art to which the present disclosure pertains without departing from the technical spirit and equivalent scope of the present disclosure defined by the appended claims.

## Claims

1. A battery pack comprising:
a case configured to provide an internal space and including a pack cover;
a battery cell positioned within the case;
a partition wall configured to partition the internal space of the case; and
a melting bolt configured to fasten the pack cover and the partition wall,
wherein the melting bolt is configured to melt at a predetermined temperature.

2. The battery pack of claim 1, wherein the melting bolt is configured to melt when a thermal event occurs in the battery cell.

3. The battery pack of claim 1, wherein the melting bolt includes a plastic material.

4. The battery pack of claim 1, further comprising:
a nut positioned between the pack cover and the partition wall,
wherein the melting bolt passes through the pack cover and the nut, and is at least partially inserted into the partition wall.

5. The battery pack of claim 4, wherein the nut is coupled to an inner surface of the pack cover.

6. The battery pack of claim 4, wherein the melting bolt includes:
a first part passing through the pack cover and the nut; and
a second part extending from the first part and inserted into the partition wall, and
wherein the first part is longer than the second part.

7. The battery pack of claim 6, wherein the melting bolt is configured such that the first part and the second part separate from each other when a thermal event occurs in the battery cell.

8. The battery pack of claim 4, wherein the partition wall includes an insertion hole into which the melting bolt is inserted, and
wherein a sum of a thickness of the pack cover and a thickness of the nut is greater than a depth of the insertion hole.

9. The battery pack of claim 1, wherein multiple melting bolts are provided, and
wherein the multiple melting bolts are arranged along a longitudinal direction of the partition wall.

10. The battery pack of claim 1, further comprising:
a module case installed within the case and configured to accommodate the battery cell,
wherein the module case includes a venting hole facing the pack cover.

11. A vehicle comprising the battery pack of claim 1.

12. A battery pack case comprising:
a flat base plate;
a side wall installed on a top surface of the base plate along a perimeter of the base plate;
a flat pack cover coupled to an upper surface of the side wall and defining an internal space together with the base plate;
a partition wall installed on the top surface of the base plate and partitioning the internal space; and
a melting bolt fastening the pack cover and the partition wall,
wherein the melting bolt is configured to melt at a predetermined temperature.

13. The battery pack case of claim 12, wherein the melting bolt is configured to melt when a thermal event occurs in the battery cell.

14. The battery pack case of claim 12, wherein the melting bolt includes a plastic material.

15. The battery pack case of claim 12, further comprising:
a nut positioned between the pack cover and the partition wall,
wherein the melting bolt passes through the pack cover and the nut, and is at least partially inserted into the partition wall.

16. The battery pack case of claim 15, wherein the melting bolt includes:
a first part passing through the pack cover and the nut; and
a second part extending from the first part and inserted into the partition wall, and
wherein the first part is longer than the second part.

17. The battery pack case of claim 16, wherein the melting bolt is configured such that the first part and the second part separate from each other when a thermal event occurs in the battery cell.

18. A battery pack comprising the battery pack case of claim 12.
